# FASCICULE DE BREVET EUROPEEN

(11) **EP 2 855 569 B1**
(45) Date de publication et mention de la délivrance du brevet: **12.04.2017**
(21) Numéro de dépôt: 13730020.8
(22) Date de dépôt: 03.06.2013
(51) Int. Cl.: C08K 3/04, C08K 7/06, C08K 7/24, C08J 5/18, C08L 23/02

(54) **UTILISATION DE NANOCHARGES CARBONEES A TRES FAIBLE TAUX POUR LA STABILISATION UV DE MATERIAUX COMPOSITES**
VERWENDUNG EINER SEHR GERINGEN KONZENTRATION VON KOHLENSTOFF-NANOFÜLLSTOFFEN ZUR UV-STABILISIERUNG VON VERBUNDWERKSTOFFEN
USE OF A VERY LOW CONCENTRATION OF CARBON NANOFILLERS FOR THE UV-STABILISATION OF COMPOSITE MATERIALS

(30) Priorité: 04.06.2012 FR 1255186; 04.06.2012 US 201261667725 P
(43) Date de publication de la demande: 08.04.2015
(73) Titulaire: Arkema France, 92700 Colombes (FR)
(72) Inventeur: KORZHENKO, Alexander, F-64000 Pau (FR); DELPRAT, Patrick, F-64230 Lescar (FR); BLUTEAU, Catherine, F-64000 Pau (FR); TYMOSHENKO, Andriy, F-64000 Pau (FR); GORYACHKIN, Anatoliy, F-64000 Pau (FR); ZAKHAROV, Dmitry, F-64000 Pau (FR)
(74) Mandataire: Bonnel, Claudine
(86) Numéro de dépôt international: PCT/FR2013/051246
(87) Numéro de publication internationale: WO 2013/182794

(56) Documents cités:
- EP-A1- 2 236 556
- WO-A2-03/040026
- KR-A- 20090 065 111
- US-A1- 2006 112 512

## Description

### Domaine de l'invention

La présente invention concerne l'utilisation de très faibles taux de nanocharges carbonées, en particulier de nanotubes de carbone, pour améliorer la résistance au vieillissement, notamment la protection vis-à-vis de la lumière ultraviolette (UV), d'un matériau composite à base d'une matrice polymère.

### Etat de la technique

Les nanotubes de carbone (ou NTC) sont connus et possèdent des structures cristallines particulières, de forme tubulaire, creuses et closes, obtenues à partir de carbone. Les NTC sont en général constitués d'un ou plusieurs feuillets de graphite agencés de façon concentrique autour d'un axe longitudinal. On distingue ainsi les nanotubes mono-parois (Single Wall Nanotubes ou SWNT) et les nanotubes multi-parois (Multi Wall Nanotubes ou MWNT).

Les NTC sont disponibles dans le commerce ou peuvent être préparés par des méthodes connues. Il existe plusieurs procédés de synthèse de NTC, notamment la décharge électrique, l'ablation laser et le dépôt chimique en phase vapeur ou CVD (Chemical Vapour Deposition). Ce procédé CVD consiste précisément à injecter une source de carbone à relativement haute température sur un catalyseur qui peut être constitué d'un métal tel que le fer, le cobalt, le nickel ou le molybdène, supporté sur un solide inorganique tel que l'alumine, la silice ou la magnésie. Les sources de carbone peuvent comprendre le méthane, l'éthane, l'éthylène, l'acétylène, l'éthanol, le méthanol, voire un mélange de monoxyde de carbone et d'hydrogène.

D'un point de vue mécanique, les NTC présentent à la fois une excellente rigidité (mesurée par le module d'Young), comparable à celle de l'acier, tout en étant extrêmement légers. En outre, ils présentent d'excellentes propriétés de conductivité électrique et thermique qui permettent d'envisager de les utiliser comme additifs pour conférer ces propriétés à divers matériaux, notamment macromoléculaires, tels que des polymères thermoplastiques, des élastomères ainsi que d'autres polymères thermodurcissables.

Toutefois, les NTC s'avèrent difficiles à manipuler et à disperser, en raison de leur faible taille, de leur pulvérulence et éventuellement, lorsqu'ils sont obtenus par la technique de CVD, de leur structure enchevêtrée, d'autant plus importante que l'on cherche à augmenter leur productivité massique aux fins d'améliorer la production et de réduire le taux de cendres résiduelles. L'existence de fortes interactions de Van der Waals entre les nanotubes nuit également à leur dispersibilité et à la stabilité des matériaux composites obtenus.

La mauvaise dispersibilité des NTC affecte de manière importante les caractéristiques des composites qu'ils forment avec les matrices polymères dans lesquelles ils sont introduits. On observe en particulier l'apparition de nanofissures, se formant au niveau d'agrégats de nanotubes, qui conduisent à une fragilisation du composite. Par ailleurs, dans la mesure où les NTC sont mal dispersés, il est nécessaire d'augmenter leur taux pour atteindre les propriétés désirées.

A cet effet, les NTC sont utilisés principalement pour leurs propriétés électriques aujourd'hui à un taux relativement élevé, généralement supérieur à 0,5% en poids.

Etant donné les difficultés techniques pour incorporer des NTC dans des matrices polymériques, leurs effets n'ont pas été complètement explorés.

Pour remédier à la mauvaise dispersibilité des NTC, susceptible d'affecter de manière importante les caractéristiques des matrices polymériques dans lesquelles ils sont introduits, il a été proposé différentes solutions dans l'état de la technique. Parmi celles-ci, on peut citer la sonication, qui n'a toutefois qu'un effet temporaire, ou l'ultrasonication qui a pour effet de couper en partie les nanotubes et de créer des fonctions oxygénées pouvant affecter certaines de leurs propriétés ; Ou encore on peut citer des techniques de greffage ou de fonctionnalisation des NTC qui, présentent cependant l'inconvénient d'être le plus souvent mises en oeuvre dans des conditions agressives susceptibles d'endommager, voire détruire les nanotubes.

Plus récemment, les derniers développements ont porté sur la préparation de mélanges-maîtres comportant des nanotubes de carbone à des taux élevés, dispersés efficacement et de façon homogène à l'échelle industrielle, dans une matrice polymérique, à base de polymère thermoplastique, d'un élastomère ou d'une résine thermodurcissable. On peut citer par exemple les documents au nom de la Société Déposante qui décrivent de tels procédés de préparation, EP 1 995 274 ; WO 2010/046606; WO 2010/109118 ; WO 2010/109119.

Ces mélanges-maîtres fortement dosés en nanotubes de carbone peuvent ensuite être aisément manipulés puis dilués dans des matrices polymères pour former des matériaux composites à faible taux de NTC parfaitement homogènes, destinés à la fabrication de pièces composites.

De façon surprenante, il a maintenant été découvert que l'incorporation de nanocharges carbonées telles que des nanotubes de carbone dans une matrice polymère à un taux extrêmement faible, inférieur à 0,1% en poids, permettait d'en améliorer la stabilisation, notamment la protection contre la lumière ultraviolette (UV) tout en conservant des propriétés mécaniques élevées. Dans ces conditions, il a été constaté que les nanocharges carbonées telles que des nanotubes de carbone remplacent avantageusement le noir de carbone pour éviter la dégradation des propriétés mécaniques liées au vieillissement UV de matériaux composites.

En effet, la protection des matières plastiques vis-à-vis de la dégradation par les UV est généralement obtenue en ajoutant des additifs appropriés tels que des antioxydants, des agents typiques de protection contre les UV (c'est-à-dire HALS) et souvent du noir de carbone.

Le noir de carbone est ainsi l'un des agents de stabilisation vis-à-vis de la lumière UV les plus largement utilisés et les plus efficaces pour certaines applications des matières plastiques (tubes, films pour l'agriculture, gaines de câble de télécommunications, etc.).

A cet effet, des matrices polymères sont additivées de noir de carbone, généralement à des teneurs pouvant aller de un à quelques % afin de protéger contre le vieillissement les matériaux composites et les objets produits à partir de ces matrices polymères.

Dans le document US 2006/112512, il a été proposé d'incorporer des nanotubes de carbone à une teneur allant de 0,1 à 1% dans des compositions à base d'élastomères pour en améliorer la résistance à la dégradation UV. Cependant, selon ce document, il est nécessaire d'y adjoindre des fullerènes pour obtenir l'effet recherché.

La présente invention a pour but de remplacer le noir de carbone par des nanocharges carbonées, telles que des nanotubes de carbone à des teneurs nettement plus faibles, de l'ordre de 50 fois plus faibles que les teneurs habituelles en noir de carbone, pour protéger des matériaux composites à base de matrices polymères contre le vieillissement lié à l'exposition aux UV.

### Résumé de l'invention

De façon plus précise, l'invention a pour objet l'utilisation de nanocharges carbonées pour améliorer la résistance au vieillissement vis-à-vis de la lumière UV d'un matériau composite comprenant une composition polymérique, caractérisée en ce que la teneur en nanocharges carbonées est comprise entre 1 ppm et 0,075 % en poids par rapport au matériau composite.

Selon l'invention, les nanocharges carbonées sont choisies parmi les nanotubes de carbone, les nanofibres de carbone, le graphène ou un mélange de ceux-ci en toutes proportions.

Selon l'invention, le matériau composite ainsi stabilisé ne comporte pas d'agrégats de nanocharges carbonées de taille supérieure à 10 µm. De plus, la stabilisation UV de la composition polymérique n'est pas réalisée au détriment des propriétés mécaniques, thermomécaniques ou liées à la processabilité industrielle de cette composition. Il a été au contraire constaté qu'au moins l'une de ces propriétés pouvait être améliorée lors de la stabilisation UV à l'aide des nanocharges carbonées.

Le matériau composite stabilisé selon l'invention peut être avantageusement transformé en film transparent et résistant aux UV, par exemple en film d'une épaisseur allant de 10 µm à 50 µm et absorbant au moins 5% de la lumière UV, visible ou IR en transmission, comparativement à des matériaux non absorbants qui ne sont pas stabilisés par des nanocharges carbonées.

### Description détaillée

### Les nanocharges carbonées

Selon l'invention, les nanocharges carbonées sont choisies parmi les nanotubes de carbone, les nanofibres de carbone, le graphène ou un mélange de ceux-ci en toutes proportions.

Les nanotubes de carbone peuvent être du type monoparoi, à double paroi ou à parois multiples. Les nanotubes à double paroi peuvent notamment être préparés comme décrit par FLAHAUT et al dans Chem. Com. (2003), 1442. Les nanotubes à parois multiples peuvent de leur côté être préparés comme décrit dans le document WO 03/02456. On préfère selon l'invention des nanotubes de carbone multi-parois obtenus suivant un procédé de dépôt chimique en phase vapeur (ou CVD), par décomposition catalytique d'une source de carbone (de préférence d'origine végétale), tel que décrit notamment dans la demande EP 1 980 530 de la Demanderesse.

Les nanotubes ont habituellement un diamètre moyen allant de 0,1 à 100 nm, de préférence de 0,4 à 50 nm et, mieux, de 1 à 30 nm, voire de 10 à 15 nm, et avantageusement une longueur de 0,1 à 10 µm. Leur rapport longueur/diamètre est de préférence supérieur à 10 et le plus souvent supérieur à 100. Leur surface spécifique est par exemple comprise entre 100 et 300 m²/g, avantageusement entre 200 et 300 m²/g, et leur densité apparente peut notamment être comprise entre 0,05 et 0,5 g/cm3 et plus préférentiellement entre 0,1 et 0,2 g/cm3. Les nanotubes multiparois peuvent par exemple comprendre de 5 à 15 feuillets (ou parois) et plus préférentiellement de 7 à 10 feuillets. Ces nanotubes peuvent ou non être traités.

Un exemple de nanotubes de carbone bruts est notamment disponible dans le commerce auprès de la société ARKEMA sous la dénomination commerciale Graphistrength^{®} C100.

Ces nanotubes peuvent être purifiés et/ou traités (par exemple oxydés) et/ou fonctionnalisés, avant leur mise en oeuvre dans le procédé selon l'invention.

La purification des nanotubes peut être réalisée par lavage à l'aide d'une solution d'acide sulfurique, de manière à les débarrasser d'éventuelles impuretés minérales et métalliques résiduelles, comme par exemple le fer, provenant de leur procédé de préparation. Le rapport pondéral des nanotubes à l'acide sulfurique peut notamment être compris entre 1 :2 et 1 :3. L'opération de purification peut par ailleurs être effectuée à une température allant de 90 à 120°C, par exemple pendant une durée de 5 à 10 heures. Cette opération peut avantageusement être suivie d'étapes de rinçage à l'eau et de séchage des nanotubes purifiés. Les nanotubes peuvent en variante être purifiés par traitement thermique à haute température, typiquement supérieur à 1000°C.

L'oxydation des nanotubes est avantageusement réalisée en mettant ceux-ci en contact avec une solution d'hypochlorite de sodium renfermant de 0,5 à 15% en poids de NaOCl et de préférence de 1 à 10% en poids de NaOCl, par exemple dans un rapport pondéral des nanotubes à l'hypochlorite de sodium allant de 1:0,1 à 1:1. L'oxydation est avantageusement réalisée à une température inférieure à 60°C et de préférence à température ambiante, pendant une durée allant de quelques minutes à 24 heures. Cette opération d'oxydation peut avantageusement être suivie d'étapes de filtration et/ou centrifugation, lavage et séchage des nanotubes oxydés.

La fonctionnalisation des nanotubes peut être réalisée par greffage de motifs réactifs tels que des monomères vinyliques à la surface des nanotubes. Le matériau constitutif des nanotubes est utilisé comme initiateur de polymérisation radicalaire après avoir été soumis à un traitement thermique à plus de 900°C, en milieu anhydre et dépourvu d'oxygène, qui est destiné à éliminer les groupes oxygénés de sa surface. Il est ainsi possible de polymériser du méthacrylate de méthyle ou du méthacrylate d'hydroxyéthyle à la surface de nanotubes de carbone en vue de faciliter notamment leur dispersion dans le PVDF.

On peut utiliser dans la présente invention des nanotubes bruts, c'est-à-dire des nanotubes qui ne sont ni oxydés ni purifiés ni fonctionnalisés et n'ont subi aucun autre traitement chimique et/ou thermique. En variante, on peut utiliser des nanotubes purifiés, notamment par traitement thermique à haute température. On préfère par ailleurs que les nanotubes de carbone ne soient pas broyés.

Les nanofibres de carbone sont, comme les nanotubes de carbone, des nanofilaments produits par dépôt chimique en phase vapeur (ou CVD) à partir d'une source carbonée qui est décomposée sur un catalyseur comportant un métal de transition (Fe, Ni, Co, Cu), en présence d'hydrogène, à des températures de 500 à 1200°C. Toutefois, ces deux charges carbonées se différencient par leur structure (I. MARTIN-GULLON et al., Carbon 44 (2006) 1572-1580). En effet, les nanotubes de carbone sont constitués d'un ou plusieurs feuillets de graphène enroulés manière concentrique autour de l'axe de la fibre pour former un cylindre ayant un diamètre de 10 à 100 nm. Au contraire, les nanofibres de carbone se composent de zones graphitiques plus ou moins organisées (ou empilements turbostratiques) dont les plans sont inclinés à des angles variables par rapport à l'axe de la fibre. Ces empilements peuvent prendre la forme de plaquettes, d'arêtes de poisson ou de coupelles empilées pour former des structures ayant un diamètre allant généralement de 100 nm à 500 nm voire plus.

On préfère utiliser des nanofibres de carbone ayant un diamètre de 100 à 200 nm, par exemple d'environ 150 nm (VGCF® de SHOWA DENKO), et avantageusement une longueur de 100 à 200 µm.

Le terme « graphène » désigne un feuillet de graphite plan, isolé et individualisé, mais aussi, par extension, un assemblage comprenant entre un feuillet et quelques dizaines de feuillets et présentant une structure plane ou plus ou moins ondulée. Chaque feuillet de graphène est formé d'atomes de carbone liés les uns aux autres par des liaisons C-C de type sp² et formant un réseau hexagonal bidimensionnel.

D'une manière générale, le graphène utilisé dans l'invention se présente sous la forme de particules solides de taille nanométrique présentant une épaisseur inférieure à 15 nm et au moins une dimension latérale sensiblement perpendiculaire à ladite épaisseur comprise entre 0,1 µm et 500 µm, et comprenant de 1 à 50 feuillets, lesdits feuillets étant susceptibles d'être désolidarisés les uns des autres sous la forme de feuillets indépendants par exemple lors d'un traitement par des ultrasons.

Selon une forme d'exécution préférée de l'invention, les nanocharges carbonées comprennent des nanotubes de carbone, de préférence des nanotubes de carbone multi-parois obtenus suivant un procédé de dépôt chimique en phase vapeur, seuls ou en mélange avec du graphène.

Selon une forme d'exécution préférée de l'invention, les nanocharges carbonées sont utilisées à une teneur comprise entre 10 ppm et 0,075% en poids par rapport au matériau composite.

Il est possible d'adjoindre aux nanocharges carbonées d'autres stabilisants conventionnels pour renforcer l'effet de stabilisation UV des nanocharges carbonées.

### La composition polymérique

Selon l'invention, la composition polymérique comprend une matrice polymère renfermant au moins un polymère qui peut être un polymère thermoplastique ou une base de résine élastomérique ou un mélange de ceux-ci en toutes proportions.

Selon une première forme d'exécution de l'invention, la composition polymérique renferme un polymère thermoplastique. Par « polymère thermoplastique », on entend, au sens de la présente invention, un polymère qui fond lorsqu'on le chauffe et qui peut être mis et remis en forme à l'état fondu.

Ce polymère thermoplastique peut notamment être choisi parmi : les homo- et copolymères d'oléfines tels que le polyéthylène, le polypropylène, le polybutadiène, le polybutylène et les copolymères acrylonitrile-butadiène-styrène ; les homo- et copolymères acryliques et les poly(méth)acrylates d'alkyles tels que le poly(méthacrylate de méthyle) ; les homo- et copolyamides ; les polycarbonates ; les polyesters dont le poly(téréphtalate d'éthylène) et le poly(téréphtalate de butylène) ; les polyéthers tels que le poly(phénylène éther), le poly(oxyméthylène) et le poly(oxyéthylène) ou poly(éthylène glycol); le polystyrène ; les copolymères de styrène et d'anhydride maléique ; le poly(chlorure de vinyle) ; les polymères fluorés tels que le poly(fluorure de vinylidène), le polytétrafluoréthylène et le polychlorotrifluoroéthylène ; les caoutchoucs naturels ou synthétiques ; les polyuréthanes thermoplastiques ; les polyaryl éther cétones (PAEK) telles que la polyétheréthercétone (PEEK) et la polyéther cétone cétone (PEKK) ; le polyétherimide ; la polysulfone ; le poly(sulfure de phénylène) ; l'acétate de cellulose ; le poly(acétate de vinyle) ; et leurs mélanges.

Selon une forme d'exécution, le polymère est choisi parmi les homo- et copolymères d'oléfines, en particulier les homo- et copolymères d'éthylène ou de propylène, et les homo- et copolymères d'amides comme les polyamides 6, 6.6, 6.10, 6.12, 11, 12, 10.10, 12.12, 4.6, ou copolymères avec des oléfines ou des esters, éthers ou composés phénoliques.

Dans une seconde forme d'exécution de l'invention, la composition polymérique renferme une base de résine élastomérique. Par « base de résine élastomérique », on entend, dans la présente description, un polymère organique ou siliconé, qui forme, après vulcanisation, un élastomère capable de supporter de grandes déformations de façon quasi-réversible, c'est-à-dire susceptible d'être soumis à une déformation uniaxiale, avantageusement d'au moins deux fois sa longueur d'origine à température ambiante (23°C), pendant cinq minutes, puis de recouvrer, une fois la contrainte relâchée, sa dimension initiale, avec une déformation rémanente inférieure à 10% de sa dimension initiale.

Du point de vue structural, les élastomères sont généralement constitués de chaînes polymériques reliées entre elles, pour former un réseau tridimensionnel. Plus précisément, on distingue parfois les élastomères thermoplastiques, dans lesquels les chaînes polymériques sont reliées entre elles par des liaisons physiques, telles que des liaisons hydrogène ou dipôle-dipôle, des élastomères thermodurcissables, dans lesquels ces chaînes sont reliées par des liaisons covalentes, qui constituent des points de réticulation chimique. Ces points de réticulation sont formés par des procédés de vulcanisation mettant en oeuvre un agent de vulcanisation qui peut par exemple être choisi, selon la nature de l'élastomère, parmi les agents de vulcanisation à base de soufre, en présence de sels métalliques de dithiocarbamates ; les oxydes de zinc combinés à de l'acide stéarique ; les résines phénol-formaldéhyde bifonctionnelles éventuellement halogénées, en présence de chlorure d'étain ou d'oxyde de zinc ; les peroxydes ; les amines ; les hydrosilanes en présence de platine.

La présente invention concerne plus particulièrement les bases de résine élastomérique renfermant, ou constituées par, des élastomères thermodurcissables éventuellement en mélange avec des élastomères non réactifs, c'est-à-dire non vulcanisables (tels que les caoutchoucs hydrogénés).

Les bases de résine élastomérique utilisables selon l'invention peuvent notamment comprendre, voire être constituées par, un ou plusieurs polymères choisis parmi : les élastomères fluorocarbonés ou fluorosiliconés ; les homo- et copolymères du butadiène, éventuellement fonctionnalisées par des monomères insaturés tels que l'anhydride maléique, l'acide (méth)acrylique, l'acrylonitrile (NBR) et/ou le styrène (SBR ; SBS ; SEBS) ; le néoprène (ou polychloroprène) ; le polyisobutylène (PIB) ; le polyisopropylène (PIP) ; le polyisoprène ; les copolymère d'isoprène avec le styrène, le butadiène, l'acrylonitrile et/ou le méthacrylate de méthyle ; les copolymères à base de propylène et/ou d'éthylène et notamment les terpolymères à base d'éthylène, de propylène et de diènes (EPDM), ainsi que les copolymères de ces oléfines avec un (méth)acrylate d'alkyle ou l'acétate de vinyle ; les caoutchoucs naturels (NR) ; les caoutchoucs butyle halogénés ; les élastomères de silicone tels que les poly(diméthylsiloxanes) à extrémités vinyliques ; les polyuréthanes (PU) ; les plastomères comprenant des oléfines en C-4, C-5, C-6, C-8 C-9, ou C-12 ; les polyesters ; les polymères acryliques tels que le poly(acrylate de butyle) porteur de fonctions acide carboxylique ou époxy ; ainsi que leurs dérivés modifiés ou fonctionnalisés et leurs mélanges.

On préfère utiliser selon l'invention les résines élastomériques EPDM, SBR, SBS, SEBS, NBR, NR, PIB, PIP, PU, ou les plastomères en C-4, C-5, C-6, C-8, C-9, C-12, ou leurs mélanges en toutes proportions.

Selon une forme d'exécution préférée de l'invention, la composition polymérique comprend au moins un polymère thermoplastique.

### Autres constituants

Outre les constituants précités, selon l'invention, le matériau composite comprenant une composition polymérique, peut comprendre d'autres additifs, en particulier choisis parmi les additifs non polymériques ou les additifs polymériques.

Les additifs non polymériques éventuellement inclus dans le matériau composite selon l'invention comprennent en particulier des plastifiants non polymériques, des tensioactifs tels que le dodécyl benzène sulfonate de sodium, des charges inorganiques telles que la silice, le dioxyde de titane, le talc ou le carbonate de calcium, des filtres UV, notamment à base de dioxyde de titane, des retardateurs de flamme, des solvants du polymère, des stabilisants thermiques ou à la lumière, notamment à base de phénol ou de phosphite, et leurs mélanges.

Comme additifs polymériques, on peut citer des polymères dispersants ou plastifiants, notamment des polymères dispersants améliorant la dispersion des nanocharges dans la matrice polymère.

La nature chimique du dispersant est fonction de la nature chimique de la matrice polymère à renforcer par les nanocharges carbonées. On peut citer par exemple comme dispersants, les oligomères de téréphtalate de butyle cyclique (notamment la résine CBT^{®} 100 de CYCLICS), les cires naturelles, les cires synthétiques, les cires de polyoléfines, les acides gras et leurs dérivés, les esters/amides, les acides gras saponifiés, le stearate de zinc, les esters sorbitaniques d'acides le glycerol ester, les dérivés d'acides organiques, la partie organique d'organosilanes tels que l'amino Silane, (STRUKTOL® SCA 1100) le chloropropyle silane (STRUKTOL® SCA 930), l'epoxy silane (STRUKTOL® SCA 960), le méthacryloxy silane (STRUKTOL® SCA 974), les Vinyl silanes, STRUKTOL® SCA 971 and SCA 972), les polymères greffés (Polymer-G-MAH, Polymer-G-GMA), les titanates and zirconates (Tyzor). Les oligomères silsesquioxanes (POSS), les additifs ramifiés et polymères commercialisés sous les noms Boltorn H20, H30, H40, H20, H30, H40, S 1200, D 2800, P/S80 1200, DEO750 8500, H 1500, H/S80 1700, HV 2680, P 1000, PS 1925, PS 2550, H311, H2004, P500, P1000, W3000, U3000, et autres, DSM Hybrane), BYK-C 8000 de BYK Company.

Un procédé de préparation d'un matériau composite comprenant une composition polymérique et des nanocharges carbonées, stabilisé vis-à-vis de la lumière UV selon la présente invention sera à présent décrit plus en détails.

Ce procédé comprend au moins les étapes suivantes :
a) l'introduction, puis le malaxage, dans un dispositif de compoundage, d'un mélange-maître concentré en nanocharges carbonées, avec une matrice polymérique pour obtenir un pré-composite comprenant de 0,25% à 3% en poids de nanocharges carbonées ;
b) éventuellement la transformation du pré-composite sous forme solide agglomérée telle que des granulés ou de la poudre broyée ;
c) l'introduction du pré-composite dans une matrice polymère renfermant au moins un polymère choisi parmi un polymère thermoplastique et une base de résine élastomère ou un mélange de ceux-ci en toutes proportions, pour obtenir un matériau composite.

Ce procédé comprend une première étape a) de dilution d'un mélange-maître concentré en nanocharges carbonées dans une matrice polymérique en vue d'obtenir un pré-composite comprenant de 0,25% à 3% en poids de nanocharges carbonées.

Par mélange-maître concentré en nanocharges carbonées, on entend un mélange-maître renfermant de 5% à 50% en poids de nanocharges carbonées, notamment de nanotubes de carbone, dispersées dans une matrice polymérique à base d'un polymère thermoplastique, d'une base de résine élastomère et/ou d'un polymère dispersant.

Parmi les mélanges-maîtres utilisables, on peut citer par exemple les grades Graphistrength^{®} CM de la société déposante, disponibles commercialement, notamment les grades CM 12-30 ; CM 13-30 ; CM 1-20 ; CM2-20 ; CM 3-20 ; CM 6-20 ; CM 7-20.

L'étape de dilution peut être réalisée par malaxage dans un dispositif de compoundage et conduit directement à un pré-composite comprenant de 0,25% à 3% en poids de nanocharges carbonées.

Dans une variante, l'étape de dilution est réalisée en au moins deux étapes successives, afin d'affiner la dispersion, la première conduisant à un pré-composite comprenant de 2,5% à 10% en poids, de préférence de 2,5% à 5% en poids de nanocharges carbonées, la seconde conduisant à un pré-composite comprenant de 0,25% à 3% en poids de nanocharges carbonées.

Selon cette variante, il est possible d'atteindre avec précision des taux très faibles de nanocharges dans la dispersion, tout en évitant le risque d'agglomération des nanocharges carbonées au sein de la dispersion.

Par « dispositif de compoundage », on entend, dans la présente description, un appareillage classiquement utilisé dans l'industrie des matières plastiques. Dans cet appareillage, la composition polymérique et le mélange-maître sont mélangés à l'aide d'un dispositif à fort cisaillement, par exemple une extrudeuse à double vis co-rotatives ou contre-rotatives ou un co-malaxeur.

Des exemples de co-malaxeurs utilisables selon l'invention sont les co-malaxeurs BUSS® MDK 46 et ceux de la série BUSS® MKS ou MX, commercialisés par la société BUSS AG, qui sont tous constitués d'un arbre à vis pourvu d'ailettes, disposé dans un fourreau chauffant éventuellement constitué de plusieurs parties et dont la paroi interne est pourvue de dents de malaxage adaptées à coopérer avec les ailettes pour produire un cisaillement de la matière malaxée. L'arbre est entraîné en rotation, et pourvu d'un mouvement d'oscillation dans la direction axiale, par un moteur. Ces co-malaxeurs peuvent être équipés d'un système de fabrication de granulés, adapté par exemple à leur orifice de sortie, qui peut être constitué d'une vis d'extrusion ou d'une pompe.

Les co-malaxeurs utilisables selon l'invention ont de préférence un rapport de vis L/D allant de 7 à 22, par exemple de 10 à 20, tandis que les extrudeuses co-rotatives ont avantageusement un rapport L/D allant de 15 à 56, par exemple de 20 à 50.

Comme dispositif de compoundage, on peut utiliser, notamment dans le cas où la matrice polymérique est à base d'une base de résine élastomère solide, un mélangeur ou broyeur à cylindres (bi- ou tricylindriques).

Selon l'étape a) du procédé selon l'invention, l'introduction, dans le dispositif de compoundage, du mélange-maître concentré et de la matrice polymérique peut se faire de différentes manières, soit simultanément dans deux organes d'introduction séparés, soit successivement dans une même zone d'alimentation du mélangeur.

La matrice polymérique peut être de même nature que la matrice polymérique constituant le mélange-maître concentré. En variante, le mélange-maître concentré comprend un dispersant et la matrice polymérique peut être différente de la matrice polymérique constituant le mélange-maître concentré.

A l'issue de l'étape a) le pré-composite peut être transformé éventuellement sous une forme physique solide agglomérée, par exemple sous forme de granulés, ou de poudre broyée, ou sous forme de joncs, de bande ou de film (étape b).

Selon l'étape c) du procédé selon l'invention, le pré-composite est introduit dans une matrice polymère renfermant au moins un polymère choisi parmi un polymère thermoplastique et une base de résine élastomère, tels que décrits précédemment.

L'étape c) peut être réalisée au moyen de tout dispositif classique, en particulier à l'aide de mélangeurs internes, ou de mélangeurs ou broyeurs à cylindres (bi- ou tricylindriques). La quantité de pré-composite introduite dans la matrice polymère dépend du taux de nanocharges carbonées que l'on souhaite ajouter à cette matrice en vue d'obtenir les propriétés mécaniques recherchées pou le matériau composite obtenu.

Cette matrice polymère comprend au moins un polymère, qui peut être identique à, (ou différent de), celui ou à ceux utilisés dans la fabrication du mélange-maître, ou dans la préparation du pré-composite, ainsi qu'éventuellement divers additifs, par exemple des lubrifiants, des pigments, des stabilisants, des charges ou renforts, des agents anti-statiques, des fongicides, des agents ignifugeants, des solvants, des agents d'expansion, des modificateurs de rhéologie et leurs mélanges.

Le matériau composite obtenu peut être mis en forme selon toute technique appropriée, notamment par injection, extrusion, compression ou moulage, suivie d'un traitement de vulcanisation ou de réticulation dans le cas où la matrice polymérique comprend une base de résine élastomérique.

En variante, l'introduction de pré-composite dans la matrice polymère selon l'étape c) peut être effectuée à sec, directement dans l'outil de mise en forme du matériau composite, tel qu'un dispositif d'injection.

La résistance au vieillissement vis-à-vis de la lumière UV du matériau composite, obtenue selon l'invention, peut être contrôlée par la détermination de ses propriétés mécaniques après une exposition aux UV pendant plus d'un mois.

La présence de nanocharges carbonées à un taux aussi faible que 1 ppm à 0,1% en poids permet en outre d'obtenir un effet comparable à l'effet standard obtenu avec des teneurs nettement supérieures en noir de carbone, en termes de coloration intrinsèque.

L'invention sera mieux comprise à la lumière des exemples non limitatifs et purement illustratifs suivants.

### Exemples

### Exemple 1 : Effet des NTC sur la stabilisation UV de polyéthylène

On a préparé un mélange-maître (MB) contenant 2,5% de NTC GRAPHISTRENGTH C100 produit par Arkema dans du polyéthylène HDPE, HMA 018 d'Exxon-Mobil. Le mélange a été réalisé par compoundage dans une extrudeuse bi-vis CLEXTRAL BC21.

Les propriétés de ce mélange-maître (MB) sont indiquées dans le tableau 1.

**Tableau 1**

| | MB |
|---|---|
| NTC (%) | 2,5 |
| HDPE, HMA 018 (%) | 97,5 |
| | |
| MFI 190°C, 2,16 kg (g/10min) | 18 |
| Résistance à la traction au seuil d'écoulement, 50 mm/min (MPa) | 22 |
| Résistance à la traction au seuil d'écoulement, 100 mm/min (MPa) | 23 |
| Résistance à la rupture, 50 mm/min (MPa) | 12 |
| Résistance à la rupture, 100 mm/min (MPa) | 11 |
| Allongement à la rupture, 50 mm/min (%) | 180 |
| Allongement à la rupture, 100 mm/min (%) | 120 |

Le mélange-maître MB a été dilué dans polyéthylène MDPE 3802 de Total Petrochemicals à sec dans les mêmes conditions de compoundage en vue de préparer 2 matériaux composites comportant 2% et 4% de mélange-maître MB, soit par conséquent 2 matériaux composites renfermant 0,05% et 0,1% de NTC.

Les propriétés mécaniques (norme NF A 49-110, vitesse d'élongation 100 mm/min) ont été évaluées sur les 2 matériaux composites avant et après exposition UV.

L'exposition UV a été réalisée sur des haltères 1BA, dimensions 10x2 mm, découpées selon la norme ISO 527-2 :
- Source d'irradiation : lampe Xénon (selon norme NF T 51-056)
- Intensité d'irradiation : 60±5 W/m2
- Filtre : Xenochrome 300, longueur d'onde 300 - 400 nm
- Température du fond noir : 50±5°C
- Humidité relative : 45±10%
- Durée d'exposition : 800 heures.

Les échantillons ont été conditionnés à température ambiante pendant 48h avant de réaliser les mesures de traction.

A titre comparatif, des échantillons de polyéthylène MDPE 3802, MDPE 3802 B (MDPE 3802 additivé de 2-2,5% de Noir de carbone) et HDPE 4206 B (HDPE 4206 additivé de 2-2,5% de Noir de carbone) provenant de Total Petrochemicals ont été soumis aux mêmes conditions de tests.
L'ensemble des résultats figure dans le tableau 2.

**Tableau 2**

| | | MDPE 3802 (référence) | MDPE 3802 B | HDPE 4206 B | MDPE 3802 + 2% MB | MDPE 3802 + 4% MB |
|---|---|---|---|---|---|---|
| Noir de carbone, % | | 0 | 2,0 - 2,5 | 2,0 - 2,5 | 0 | 0 |
| NTC, % | | 0 | 0 | 0 | 0,05 | 0,1 |
| | | | | | | |
| Résistance à la traction au seuil d'écoulement, (MPa) | Avant exposition UV | 18 | 16 | 19 | 16 | 16 |
| | Après exposition UV | 8 | 20 | 24 | 20 | 20 |
| | | | | | | |
| Résistance à la rupture, (MPa) | Avant exposition UV | 23 | 24 | 22 | 23 | 17 |
| | Après exposition UV | 21 | 28 | 30 | 28 | 27 |
| | | | | | | |
| Allongement à la rupture, (%) | Avant exposition UV | 680 | 750 | 690 | 720 | 520 |
| | Après exposition UV | 6 | 670 | 650 | 650 | 640 |
| Evolution de l'allongement à la rupture, (%) | | -99 | -10 | -6 | -10 | +23 |

Ces essais ont montré que le polyéthylène de moyenne densité MDPE 3802 de base a perdu complètement ses propriétés mécaniques après une exposition aux UV pendant 800 heures.

Les grades commerciaux MDPE 3802 B et HDPE 4206 B, stabilisés avec du noir de carbone présentent un comportement similaire avec une stabilité aux UV satisfaisante.

L'incorporation de 0,05% de NTC dans le MDPE 3802 de base conduit à une stabilisation UV similaire à celle obtenue avec les 2 - 2,5% de noir de carbone présents dans le grade commercial MDPE 3802 B.

Le MDPE 3802 additivé de 0,1% de NTC présente des propriétés mécaniques initiales en termes de résistance et d'allongement à la rupture, inférieures à celles du MDPE 3802 B, mais retrouve des propriétés équivalentes à celles du MDPE 3802 B après une exposition UV durant 800 heures.

### Exemple 2 : Effet des NTC sur la coloration d'un polyéthylène

Le mélange-maître Graphistrength C M4-30 de la société Arkema a été dilué dans du polyéthylène, grade MDPE dans une extrudeuse bi-vis, en plusieurs étapes pour obtenir une composition comprenant 0,25% de NTC. Cette composition a été dosée à sec directement dans la machine d'injection conduisant à des composites de différentes teneurs en NTC.

Des déterminations de coloration ont été réalisées par réflexion à un angle de 10°, selon la norme ISO 12-647. A des teneurs très faibles, inférieures à 0,01 %, notamment allant de 5 ppm à moins de 100 ppm, les NTC sont utilisables comme pigments noirs.

Dans le tableau 3 suivant, le paramètre L correspond à la clarté du produit (L=0, produit noir, L=100, produit blanc), les paramètres a et b sont proches de 0 pour des produits noirs.

**Tableau 3**

| Teneur NTC, % | 0 MDPE réf | 0,001 | 0,005 | 0,01 | 0,05 |
|---|---|---|---|---|---|
| L | 85,36 | 59,08 | 33,93 | 28,08 | 24,5 |
| a | -2,1 | - 0,05 | - 0,31 | - 0,36 | - 0,2 |
| b | 1,7 | 2,94 | -0,01 | - 0,25 | 0,08 |

## Revendications

1. Utilisation de nanocharges carbonées choisies parmi les nanotubes de carbone, les nanofibres de carbone, le graphène ou un mélange de ceux-ci en toutes proportions, pour améliorer la résistance au vieillissement vis-à-vis de la lumière UV, d'un matériau composite comprenant une composition polymérique, **caractérisée en ce que** la teneur en nanocharges carbonées est comprise entre 1 ppm et 0.,075 % en poids, de préférence entre 10 ppm et 0,075% en poids par rapport au matériau composite.

2. Utilisation selon la revendication 1 **caractérisée en ce que** les nanocharges carbonées sont des nanotubes de carbone, seuls ou en mélange avec du graphène.

3. Utilisation selon la revendication 1 ou 2 **caractérisée en ce que** la composition polymérique comprend une matrice polymère renfermant au moins un polymère choisi parmi un polymère thermoplastique, une base de résine élastomérique et leurs mélanges.

4. Utilisation selon la revendication 3 **caractérisé en ce que** le polymère thermoplastique est choisi parmi les homo- et copolymères d'oléfines tels que le polyéthylène, le polypropylène, le polybutadiène, le polybutylène et les copolymères acrylonitrile-butadiène-styrène ; les homo- et copolymères acryliques et les poly(méth)acrylates d'alkyles tels que le poly(méthacrylate de méthyle) ; les homo- et copolyamides ; les polycarbonates ; les polyesters dont le poly(téréphtalate d'éthylène) et le poly(téréphtalate de butylène) ; les polyéthers tels que le poly(phénylène éther), le poly(oxyméthylène) et le poly(oxyéthylène) ou poly(éthylène glycol); le polystyrène ; les copolymères de styrène et d'anhydride maléique ; le poly(chlorure de vinyle) ; les polymères fluorés tels que le poly(fluorure de vinylidène), le polytétrafluoréthylène et le polychlorotrifluoroéthylène ; les caoutchoucs naturels ou synthétiques ; les polyuréthanes thermoplastiques ; les polyaryl éther cétones (PAEK) telles que la polyétheréthercétone (PEEK) et la polyéther cétone cétone (PEKK) ; le polyétherimide ; la polysulfone ; le poly(sulfure de phénylène) ; l'acétate de cellulose ; le poly(acétate de vinyle) ; et leurs mélanges.

5. Utilisation selon la revendication 3 **caractérisé en ce que** la base de résine élastomérique est choisie parmi les élastomères fluorocarbonés ou fluorosiliconés ; les homo- et copolymères du butadiène, éventuellement fonctionnalisées par des monomères insaturés tels que l'anhydride maléique, l'acide (méth)acrylique, l'acrylonitrile (NBR) et/ou le styrène (SBR ; SBS ; SEBS) ; le néoprène (ou polychloroprène) ; le polyisobutylène (PIB) ; le polyisopropylène (PIP) ; le polyisoprène ; les copolymère d'isoprène avec le styrène, le butadiène, l'acrylonitrile et/ou le méthacrylate de méthyle ; les copolymères à base de propylène et/ou d'éthylène et notamment les terpolymères à base d'éthylène, de propylène et de diènes (EPDM), ainsi que les copolymères de ces oléfines avec un (méth)acrylate d'alkyle ou l'acétate de vinyle ; les caoutchoucs naturels (NR) ; les caoutchoucs butyle halogénés ; les élastomères de silicone tels que les poly(diméthylsiloxanes) à extrémités vinyliques ; les polyuréthanes (PU) ; les plastomères comprenant des oléfines en C-4, C-5, C-6, C-8 C-9, ou C-12 ; les polyesters ; les polymères acryliques tels que le poly(acrylate de butyle) porteur de fonctions acide carboxylique ou époxy ; ainsi que leurs dérivés modifiés ou fonctionnalisés et leurs mélanges

6. Utilisation selon la revendication 1 **caractérisée en ce que** le matériau composite est utilisé pour la préparation d'un film comportant une teneur comprise entre 10 ppm et 0,075% en poids de nanocharges carbonées, ledit film ayant une épaisseur allant de 10 µm à 50 µm et absorbant au moins 5% de la lumière UV, visible ou IR en transmission.

## Patentansprüche

1. Verwendung von auf Kohlenstoff basierenden Nanofüllstoffen, die aus Kohlenstoff-Nanoröhren, Kohlenstoff-Nanofasern, Graphen oder einer Mischung davon in beliebigen Anteilen ausgewählt sind, zur Verbesserung der UV-Licht-Alterungsbeständigkeit eines Verbundwerkstoffs, der eine Polymerzusammensetzung umfasst, **dadurch gekennzeichnet, dass** der Gehalt an auf Kohlenstoff basierenden Nanofüllstoffen zwischen 1 Gew.-ppm und 0,075 Gew.-%, vorzugsweise zwischen 10 Gew.-ppm und 0,075 Gew.-%, bezogen auf den Verbundwerkstoff, liegt.

2. Verwendung nach Anspruch 1, **dadurch gekennzeichnet, dass** es sich bei den auf Kohlenstoff basierenden Nanofüllstoffen um Kohlenstoff-Nanoröhren für sich alleine oder im Gemisch mit Graphen handelt.

3. Verwendung nach Anspruch 1 oder 2, **dadurch gekennzeichnet, dass** die Polymerzusammensetzung eine Polymermatrix umfasst, die mindestens ein Polymer, das aus einem thermoplastischen Polymer, einer Elastomerharzbasis und Mischungen davon ausgewählt ist, enthält.

4. Verwendung nach Anspruch 3, **dadurch gekennzeichnet, dass** das thermoplastische Polymer aus Homo- und Copolymeren von Olefinen wie Polyethylen, Polypropylen, Polybutadien, Polybutylen und Acrylnitril-Butadien-Styrol-Copolymeren; Acryl-Homopolymeren und -Copolymeren und Polyalkyl(meth)acrylaten wie Poly(methylmethacrylat); Homo- und Copolyamiden; Polycarbonaten; Polyestern einschließlich Poly(ethylenterephthalat) und Poly-(butylenterephthalat); Polyethern wie Poly-(phenylenether), Poly(oxymethylen) und Poly(oxyethylen) oder Poly(ethylenglykol); Polystyrol; Copolymeren von Styrol und Maleinsäureanhydrid; Poly(vinylchlorid); Fluorpolymeren wie Poly-(vinylidenfluorid), Polytetrafluorethylen und Polychlortrifluorethylen; Natur- oder Synthesekautschuken; thermoplastischen Polyurethanen; Polyaryletherketonen (PAEK) wie Polyetheretherketon (PEEK) und Polyetherketonketon (PEKK); Polyetherimid; Polysulfon; Poly(phenylensulfid); Celluloseacetat; Poly(vinylacetat) und Mischungen davon ausgewählt ist.

5. Verwendung nach Anspruch 3, **dadurch gekennzeichnet, dass** die Elastomerharzbasis aus Fluorkohlenstoff- oder Fluorsilikon-Elastomeren; Homo- und Copolymeren von Butadien, gegebenenfalls funktionalisiert durch ungesättigte Monomere wie Maleinsäureanhydrid, (Meth)acrylsäure, Acrylnitril (NBR) und/oder Styrol (SBR; SBS; SEBS); Neopren (oder Polychloropren); Polyisobutylen (PIB); Polyisopropylen (PIP); Polyisopren; Copolymeren von Isopren mit Styrol, Butadien, Acrylnitril und/oder Methylmethacrylat; Copolymeren auf Basis von Propylen und/oder Ethylen und insbesondere Terpolymeren auf Basis von Ethylen, Propylen und Dienen (EPDM) sowie den Copolymeren dieser Olefine mit einem Alkyl(meth)acrylat oder Vinylacetat; Naturkautschuken (NR); halogenierten Butylkautschuken; Silikon-Elastomeren wie Poly-(dimethylsiloxanen) mit Vinylendgruppen; Polyurethanen (PU); Plastomeren, die C₄-, C₅-, C₆-, C₈-, C₉- oder C₁₂-Olefine umfassen; Polyestern; Acrylpolymeren wie Poly(butylacrylat) mit Carbonsäure- oder Epoxidfunktionen sowie den modifizierten oder funktionalisierten Derivaten davon und Mischungen davon ausgewählt ist.

6. Verwendung nach Anspruch 1, **dadurch gekennzeichnet, dass** der Verbundwerkstoff zur Herstellung einer Folie mit einem Gehalt zwischen 10 Gew.-ppm und 0,075 Gew.-% an auf Kohlenstoff basierenden Nanofüllstoffen, wobei die Folie eine Dicke im Bereich von 10 µm bis 50 µm aufweist und in Transmission mindestens 5% des UV-Lichts, sichtbaren Lichts oder IR-Lichts absorbiert.

## Claims

1. Use of carbon-based nanofillers chosen from carbon nanotubes, carbon nanofibres, graphene or a mixture of these in all proportions for improving the resistance to ageing with regard to UV light of a composite material comprising a polymeric composition, **characterized in that** the content of carbon-based nanofillers is between 1 ppm and 0.075% by weight, preferably between 10 ppm and 0.075% by weight, with respect to the composite material.

2. Use according to Claim 1, **characterized in that** the carbon-based nanofillers are carbon nanotubes, alone or as a blend with graphene.

3. Use according to Claim 1 or 2, **characterized in that** the polymeric composition comprises a polymer matrix including at least one polymer chosen from a thermoplastic polymer, an elastomeric resin base and their mixtures.

4. Use according to Claim 3, **characterized in that** the thermoplastic polymer is chosen from homo- and copolymers of olefins, such as polyethylene, polypropylene, polybutadiene, polybutylene and acrylonitrile-butadiene-styrene copolymers; acrylic homo- and copolymers and poly(alkyl (meth)acrylate)s, such as poly(methyl methacrylate); homo- and copolyamides; polycarbonates; polyesters, including poly(ethylene terephthalate) and poly(butylene terephthalate); polyethers, such as poly(phenylene ether), poly(oxymethylene) and poly(oxyethylene) or poly(ethylene glycol); polystyrene; copolymers of styrene and maleic anhydride; poly(vinyl chloride); fluoropolymers, such as poly(vinylidene fluoride), polytetrafluoroethylene and polychlorotrifluoroethylene; natural or synthetic rubbers; thermoplastic polyurethanes; polyaryletherketones (PAEKs) such as polyetheretherketone (PEEK) and polyetherketoneketone (PEKK); polyetherimide; polysulphone; poly(phenylene sulphide); cellulose acetate; poly(vinyl acetate); and their blends.

5. Use according to Claim 3, **characterized in that** the elastomeric resin base is chosen from fluorocarbon or fluorosilicone elastomers; homo- and copolymers of butadiene, optionally functionalized by unsaturated monomers, such as maleic anhydride, (meth)acrylic acid, acrylonitrile (NBR) and/or styrene (SBR; SBS; SEBS); neoprene (or polychloroprene); polyisobutylene (PIB); polyisopropylene (PIP); polyisoprene; copolymers of isoprene with styrene, butadiene, acrylonitrile and/or methyl methacrylate; copolymers based on propylene and/or ethylene and in particular terpolymers based on ethylene, propylene and dienes (EPDM), and also the copolymers of these olefins with an alkyl (meth)acrylate or vinyl acetate; natural rubbers (NR); halogenated butyl rubbers; silicone elastomers, such as poly(dimethylsiloxane)s having vinyl ends; polyurethanes (PUs); plastomers comprising C₄, C₅, C₆, C₈, C₉ or C₁₂ olefins; polyesters; acrylic polymers, such as poly(butyl acrylate) carrying carboxylic acid or epoxy functional groups; and their modified or functionalized derivatives and their blends.

6. Use according to Claim 1 **characterized in that** the composite material is used in the preparation of a film comprising a content of between 10 ppm and 0.075% by weight of carbon-based nanofillers, said film having a thickness ranging from 10 µm to 50 µm and absorbing at least 5% of the UV, visible or IR light in transmission.
